(19) Europäisches Patentamt / European Patent Office / Office européen des brevets

(11) **EP 0 904 318 B1**

(12) **EUROPEAN PATENT SPECIFICATION**

(45) Date of publication and mention
of the grant of the patent:
**25.03.2009 Bulletin 2009/13**

(21) Application number: **97932247.6**

(22) Date of filing: **23.06.1997**

(51) Int Cl.:
***C08K 11/00*** (2006.01)   ***C08K 9/00*** (2006.01)

(86) International application number:
**PCT/US1997/010872**

(87) International publication number:
**WO 1997/049761 (31.12.1997 Gazette 1997/57)**

(54) **Method for restoring the antibacterial effectiveness**

Verfahren zur Wiederherstellung der antibakteriellen Effektivität

Méthode pour rétablir l'efficacité antibactérielle

(84) Designated Contracting States:
**BE DE ES FI FR GB IE IT SE**

(30) Priority: **26.06.1996 US 670471**

(43) Date of publication of application:
**31.03.1999 Bulletin 1999/13**

(73) Proprietor: **E.I. DU PONT DE NEMOURS AND
COMPANY
Wilmington, DE 19898 (US)**

(72) Inventors:
  • **APPLETON, Gerry, Thorn
    Hockessin, DE 19707 (US)**
  • **GOSSER, Nell, Lynn
    Wilmington, DE 19803 (US)**
  • **VOGEL, Bruce, Neal
    East Amherst, NY 14051 (US)**

(74) Representative: **Morf, Jan Stefan
    Abitz & Partner
    Patentanwälte
    Postfach 86 01 09
    81628 München (DE)**

(56) References cited:
  **WO-A-97/01515            US-A- 3 847 865**

  • **DATABASE WPI Section Ch, Week 9315 Derwent
    Publications Ltd., London, GB; Class A93, AN
    93-121114 XP002043098 & JP 05 058 698 A (ISUZU
    MOTORS LTD) , 9 March 1993**
  • **DATABASE WPI Section Ch, Week 9550 Derwent
    Publications Ltd., London, GB; Class A93, AN
    95-389551 XP002043099 & JP 07 266 522 A
    (NIPPON SHEET GLASS CO LTD) , 17 October
    1995 cited in the application**

**Description**

<u>BACKGROUND OF THE INVENTION</u>

1. <u>Field of Invention</u>

This invention is directed toward a method for restoring the antibacterial properties of solid surface materials.

2. <u>Description Of The Related Art</u>

Artificial (or synthetic) marble can be considered as a general designation for various types of materials used as building products, such as bathroom vanity tops, sinks, shower stalls and kitchen counter tops, for example. Artificial marbles encompass cultured marble, onyx and solid surface materials typically comprising some kind of resin matrix and either with or without a filler present in the resin matrix. Typically, cultured marble consists of a gel coating of unfilled unsaturated polyester on a substrate of a filled unsaturated polyester, the filler generally being calcium carbonate, or the like. Onyx typically consists of a similar unfilled gel coat on a substrate of filled unsaturated polyester, the filler being alumina trihydrate (ATH). Solid surface materials are typically filled resin materials and, unlike cultured marble or onyx, do not have a gel coat. Corian® solid surface material, sold by E. I. du Pont de Nemours and Company, Wilmington, Delaware (DuPont) is a solid surface material comprising an acrylic matrix filled with ATH.

As evidenced by the presence in the market of numerous materials for eliminating or minimizing human contact with bacteria, there is clearly a demand for materials and/or processes that either minimize or kill bacteria encountered in the environment. Such materials are useful in areas of food preparation or handling and in areas of personal hygiene, such as bathrooms. Similarly, there is a use for such antibacterial materials in hospitals and nursing homes where people with lowered resistance are especially vulnerable to bacteria.

Cultured marbles have been developed wherein an antibacterial agent has been incorporated in the gel coat, but not through the matrix of the substrate. Such materials have been disclosed in Japanese Patent Application Publication Kokai: 7-266522. However, such materials have a relatively thin gel coat, typically in the order of 15 mils and, as such, when the gel coat is depleted of antibacterial agent or the gel coat wears away or is otherwise removed, the antibacterial effect is significantly decreased or lost entirely.

Japanese Patent Application Publication Kokay: 5-058698 discloses the preparation of an artificial marble by incorporation of a filler and an antibacterial agent to a matrix resin. However, it is not disclosed how to restore the antibacterial effectiveness of a working surface of a solid surface material made from the compositions disclosed therein.

With regard to solid surface materials consisting of either an unsaturated polyester resin or an epoxy resin there has not been any use of an antibacterial agent included throughout the resin. Co-pending application to assignee DuPont, Application No. PCT/US96/10991, is directed to an antibacterial agent in Corian® solid surface material.

<u>SUMMARY OF RESULTS</u>

The invention is further directed to a solid surface material comprising matrix of a resin selected from the groups consisting of acrylic compounds, unsaturated polyester compounds, and epoxy compounds; a filler dispersed in the matrix; and an antibacterial agent dispersed in the matrix having antibacterial effectiveness on a working surface and wherein the antibacterial effectiveness which is diminished with time and use can be restored by sanding the working surface.

<u>DETAILED DESCRIPTION OF THE INVENTION</u>

The antibacterial solid surface materials of this invention can have a resin matrix of epoxy, unsaturated polyester or acrylic. The term antibacterial is understood to be interchangeable with the term antimicrobial and other such like terms as would be familiar to one of ordinary skill. The antibacterial solid surface materials of this invention are effective in inhibiting or destroying many common bacteria encountered in the home, and health care or food preparation environments.

Epoxy resins are those based on epoxide groups having certain reactivity. Such materials may include epoxy resins of bisphenol type A, bisphenol type F, phenol novolak type, alicyclic epoxy, halogenated epoxy, and cycloaliphatic epoxy resins.

Unsaturated polyester resins are those wherein the reactivity is based on the presence of double or triple bonds in the carbon atoms.

As is known to those of ordinary skill in the art, there can be many additives to epoxy or unsaturated polyesters. Typically, such materials are cured by adding cross-linking agents and catalysts to enhance the crosslinking action.

Solid surface materials such as Corian®, which comprise a poly(methyl methacrylate) (PMMA) resin with ATH as a filler are useful for certain aspects of this invention. Corian® can contain pigments, reground Corian® in particulate form and other additives as can be found in U.S. Patents 3,847,865 and 4,085,246.

It had been found in co-pending application CN-0001 that Corian® with ATH as a filler exhibited a synergistic effect when certain zinc oxide-containing antibacterial agents were added to the acrylic matrix. It was not recognized in that invention that using certain other fillers and/or certain other antibacterial agents in epoxy, unsaturated polyester, or acrylic resins also achieved an antibacterial effectiveness in solid surface materials.

Fillers that can be used in the present invention are ATH, alumina monohydrate(AMH), Bayer hydrate(BayH), silica ($SiO_2$), magnesium hydroxide ($Mg(OH)_2$), calcium carbonate ($CaCO_3$), or silica as a list that is not exhaustive and not intended to limit the invention. Fillers can be present in effective amounts from as low as about 20% up to about 75% by weight. Typically, but not necessarily, the amount of filler is decreased by the weight percent of antibacterial agent added.

Antibacterial agents can be present in amounts from about 0.1% to about 5.0% by weight and more preferably from about 0.5% to about 5.0% by weight. Antibacterial agents that are useful in this invention include, but are not limited to, inorganic compounds such as a mixture of zinc oxide (about 70%) and partially silver and sodium ion-exchanged zirconium phosphate (about 30%), such as Novaron® AGZ330 (hereafter Novaron), made by Toagosei Co., Ltd., Tokyo, Japan; silver-copper zeolites, silver-zinc zeolites or silver zeolites sold as Bactekiller™ AC, AZ and A, respectively, by Kaneko Ltd., Osaka, Japan and compounds as described in U.S. Patent 5,180,085 which are inorganic core particles having a first coating of a metal or metal compound with a second coating of silica, silicate, borosilicate, alumino-silicate, alumina, aluminum phosphate, or mixtures thereof, wherein the inorganic core particles can be any of the oxides of titanium, aluminia, zinc or copper; or sulfates of calcium, strontium or barium; zinc sulfide; copper sulfide; zeolite; mica; talc; kaolin; mullite; or silica and wherein the metal or metal compounds of the first coating comprise silver, silver oxide, silver halide, copper, copper (I) oxide, copper (II) oxide, copper sulfide, zinc oxide, zinc sulfide, zinc silicate, and mixtures thereof. The metal or metal compounds and also the second coating can be present in amounts of 0.05 to 20% by weight based on the core particles. Examples of such antibacterial agents are AMP-T558 (T558) which is silver, copper oxide and zinc silicate coated on titanium dioxide and Zelec AM® (Zelec) which is silver coated on zinc oxide, both of which were developed by DuPont. In some instances it is desirable to use organic antibacterial agents. Such organic agents can include those having quaternary ammonium salts, such as Intersept® available from Interface, Kennesaw, GA or 3,5,3',4'-tetrachlorosalicylanilide such as Irgasan® available from Ciba Geigy. It is understood that the inorganic and organic antibacterial agents can be used singly.or in combination to acheive particular results.

It is known to include in solid surface materials other additives such as pigments, dyes, flame retardant agents, parting agents, fluidizing agents, viscosity control agents, curing agents, antioxidants, and the like as may be known to those of ordinary skill in the art.

Solid surface materials of this invention are typically produced by casting into a sheet form or casting into a shape form such as a sink, for example. Solid surface materials of this invention can also be produced by compression molding, injection molding or extrusion.

The problem of loss of antibacterial effectiveness in solid surface materials had not been previously addressed. It was found that the solid surface materials of this invention can lose some antibacterial effectiveness with time and use when a working surface is exposed to common household cleaners, for example. A working surface is considered here to be the surface that is exposed to the environment and that is subject to use, for example, the exposed surface of a countertop. It has been discovered in accordance with this invention that the antibacterial effectiveness which is diminished with time and use can be restored by sanding the working surface.

EXAMPLES

TESTING METHOD

The antibacterial effectiveness of the various embodiments of this invention were evaluated by using the Shake Flash Test Procedure (SFTP). This procedure is particularly useful for immobilized or slowly diffusing antibacterial agents as opposed to test methods which depend on a rapid rate of leaching of the antibacterial agent from the treated material. The SFTP ensures good contact between the bacteria and the treated material accomplished by constant agitation of the test sample in a buffer during a test period.

The samples for testing the solid surface materials were provided as 2.5 x 2.5 x 1.3 cm blocks. In each test a control sample without any antibacterial agent was provided, or as otherwise described to provide appropriate comparison to the examples of the invention.

The bacterial inoculum for the Shake Flask Test was prepared by transferring 2.0 mL of an overnight broth culture to a 300 mL nephyloculture flask containing 100 mL of Tryptic Soy Broth (TSB) (BBL, Cockeysville, MD). This flask was incubated at 35-37°C with shaking (ca. 200 rpm). Growth of the culture was determined during incubation using a Klett-Summerson Photoelectric Colorimeter (Klett Manufacturing Co., New York, NY). When the culture reached late-log phase (170-190 Klett units for *Escherichia coli* (E. coli) ATCC 25922), appropriate dilutions were made with sterile 0.2 mM phosphate buffer (pH 7.2) to yield a final cell concentration of approximately $10^5$ colony forming units per milliliter (cfu/mL).

This inoculum was then placed into sterile, disposable 250 mL Erlenmeyer flasks containing one block (2.5 x 2.5 cm) of the test material or suitable control. Each flask contained a known concentration of bacteria in a volume of 75 mL phosphate buffer.

The initial concentration of bacteria was determined by serial dilution of the inoculum in 0.2 mM phosphate buffer, pH 7.2, and plating in duplicate on Trypticase Soy Agar (TSA) (BBL, Cockeysville, MD). The flasks were shaken on a Burrell Wrist Action Shaker (Burrell Corp., Pittsburgh, PA) at room temperature. A 1.2 mL aliquot was removed from each flask after shaking for either 1 or 4 hours. Duplicate petri plates containing TSA were inoculated via spread plating with 0.1 mL each of the aliquot. The remaining 1.0 mL was serial diluted and plated in duplicate. The TSA plates were incubated at 35°C for 18-24 hours. Plates having between 30 and 300 colonies were counted and the bacterial concentration determined from the mean of the plate counts, correcting for the dilution factor. If none of the plates contained at least 30 colonies, whichever plates contained the most colonies were counted. The limit of detection of this plate count method is 10 cfu/mL. Below this limit of detection, the colony count was said to be zero.

The antibacterial activity was expressed by use of the following formulas:

$$K_t = \log_{10}(C) - \log_{10}(Ct + 1)$$

$$\Delta_t = \log_{10}(CFt) - \log_{10}(Ct + 1)$$

where:

Co = initial concentration of bacterial (cfu/mL) in test flask at time zero,

Ct = concentration of bacterial (cfu/mL) in test flask at time t (one is added to the number to avoid calculating the log of zero),

CFt = concentration of bacterial (cfu/mL) in control flask at time t.

The relationship between percent reduction and log reduction is conveniently seen by reference to the following:

| Value | % Reduction |
|-------|-------------|
| 1 | 90 |
| 2 | 99 |
| 3 | 99.9 |
| 4 | 99.99 |
| 5 | 99.999 |

Statistical calculations of antibacterial efficacy should be based on the exponential $K_t$ and $\Delta_t$ values, not the percent reduction values, which are provided for information purposes. Use of percent reduction values would give erroneous results.

In the data presented in the tables to follow, $K_t$ and $\Delta_t$ values at 1 h were not presented as they typically showed only insignificant changes from the initial bacterial density.

<u>EXAMPLES 1-10</u>

The following examples reflect testing solid surface materials having either acrylic (PMMA), unsaturated polyester (UPE), or epoxy as a matrix material with various fillers and antibacterial agents as indicated in the following tables. Corian® without any antibacterial agent included is presented as a control. The test bacteria was E. coli. The percentages given here and elsewhere in the application reflect weight percent based on the total weight of resin plus filler plus antibacterial agent (if present), unless otherwise indicated.

TABLE 1

| Sample | Resin | %/Filler | %/AB[1] | Initial CFU/mL | Average CFU/mL @ 24 h | $K_t$ @ 24 h | $\Delta_t$ @ 24 h |
|---|---|---|---|---|---|---|---|
| Control | PMMA | 60/ATH | -- | $9.40 \times 10^4$ | $5.38 \times 10^5$ | -0.76 | |
| Ex. 1 | PMMA | 60/ATH | 5.0/T558 | $9.40 \times 10^4$ | 0 | 4.97 | 5.72 |
| Ex. 2 | PMMA | 60/ATH | 5.0/Zelec | $9.40 \times 10^4$ | $1.68 \times 10^4$ | 0.75 | 1.50 |
| Ex. 3 | PMMA | 60/ATH | 5.0/Zelec | $9.40 \times 10^4$ | $3.45 \times 10^4$ | 0.44 | 1.18 |
| Ex. 4 | UPE | 60/ATH | 5.0/T558 | $9.40 \times 10^4$ | 0 | 4.97 | 5.72 |
| Ex. 5 | EPOXY | 60/ATH | 5.0/Zelec | $9.40 \times 10^4$ | $4.78 \times 10^2$ | 2.29 | 3.06 |
| | | | | | | | |
| Control | PMMA | 60/ATH | - | $2.14 \times 10^5$ | $4.15 \times 10^5$ | -0.29 | |
| Ex. 6 | EPOXY | 60/CaCO$_3$ | 5.0/T558 | $2.14 \times 10^5$ | $5.05 \times 10^2$ | 2.63 | 2.74 |
| Ex. 7 | PMMA | 61/ATH | 4.0/Bactekiller* | $2.14 \times 10^5$ | 0 | 5.33 | 5.62 |
| Ex. 8 | PMMA | 60/CaCO$_3$ | 0.5/Novaron | $2.14 \times 10^5$ | $4.28 \times 10^5$ | -0.30 | -0.01 |
| Ex. 9 | PMMA | 60/Polar CaCO$_3$ | 5.0/Zelec | $2.14 \times 10^5$ | $5.90 \times 10^4$ | 0.56 | 0.85 |
| Ex. 10 | PMMA | 61.5/ATH | 3.5/T558 | $2.14 \times 10^5$ | $2.00 \times 10^1$ | 4.01 | 4.30 |

(1) AB = antibacterial agent
* Bactekiller = Bactekiller™ AC

The results in the foregoing table indicate that effective antimicrobial agents are Novaron, Bactekiller AC, Zelec and T558. The T558 was found to be effective to some extent with various resins and fillers. The Bactekiller AC was very effective in the ATH-filled acrylic.

Examples 11-24

The following examples reflect the effectiveness against E. *coli* of different resins with different fillers and with or without additives of any antimicrobial agent. In this example the effectiveness after 4 hours was also evaluated in addition to after 24 hours as above.

TABLE 2

| Sample @ 4h | Resin | %/Filler | %/AB | Initial CFU/mL | Avg. CFU/mL @ 4 h | $K_t$ @ 4 h | $\Delta_t$ @ 4 h |
|---|---|---|---|---|---|---|---|
| Control | PMMA | 60/ATH | -- | $3.28 \times 10^5$ | $1.75 \times 10^5$ | 0.27 | 0 |
| Ex. 11 | PMMA | 62.7/ATH | 0.5/Novaron | $3.28 \times 10^5$ | $3.10 \times 10^4$ | 1.02 | 0 |
| Ex. 12 | PMMA | 65/Mg(OH)$_2$ | -- | $3.28 \times 10^5$ | $1.72 \times 10^5$ | 0.28 | 0 |
| Ex. 13 | PMMA | 61.5/Mg(OH)$_2$ | 3.5/T558 | $3.28 \times 10^5$ | $1.56 \times 10^5$ | 0.32 | 0 |
| Ex. 14 | PMMA | 65/AMH | -- | $3.28 \times 10^5$ | $2.33 \times 10^5$ | 0.15 | 0 |
| Ex. 15 | PMMA | 61.5/AMH | 3.5/T558 | $3.28 \times 10^5$ | $2.50 \times 10^0$ | 4.97 | 4.82 |
| Ex. 16 | PMMA | 65/Bay H | -- | $3.28 \times 10^5$ | $2.15 \times 10^5$ | 0.18 | 0 |
| Ex. 17 | PMMA | 61.5/Bay H | 3.5/T558 | $3.28 \times 10^5$ | $2.75 \times 10^4$ | 1.08 | 0.89 |
| Ex. 18 | PMMA | 65/SiO$_2$ | -- | $3.28 \times 10^5$ | $2.37 \times 10^5$ | 0.14 | 0 |
| Ex. 19 | PMMA | 61.5/SiO$_2$ | 3.5/T558 | $3.28 \times 10^5$ | 0 | 5.52 | 5.37 |
| Control | PMMA | 60/ATH | -- | $2.88 \times 10^5$ | $1.88 \times 10^5$ | 0.19 | 0 |
| Ex. 20 | PMMA | 62.7/ATH | 0.5/Novaron | $2.88 \times 10^5$ | $1.49 \times 10^5$ | 0.29 | 0.10 |
| Ex. 21 | UPE | 65/ATH | -- | $2.88 \times 10^5$ | $1.58 \times 10^5$ | 0.26 | 0 |
| Ex. 22 | UPE | 61/ATH | 4.0/T558 | $2.88 \times 10^5$ | 0 | 5.46 | 5.20 |
| Ex. 23 | UPE | 65/ATH | -- | $2.88 \times 10^5$ | $2.01 \times 10^5$ | 0.16 | 0 |
| Ex. 24 | UPE | 61/ATH | 4.0/T558 | $2.88 \times 10^5$ | 0 | 5.46 | 5.30 |

TABLE 3

| Sample @ 24 h | Resin | %/Filler | %/AB | Initial CFU/mL | Avg. CFU/mL | $K_t$ | $\Delta_t$ |
|---|---|---|---|---|---|---|---|
| Control | PMMA | 60/ATH | -- | $3.28 \times 10^5$ | $6.78 \times 10^5$ | -0.32 | 0 |
| Ex. 11 | PMMA | 62.7/ATH | 0.5/Novaron | $3.28 \times 10^5$ | 0 | 5.52 | 5.83 |
| Ex. 12 | PMMA | 65/Mg(OH)$_2$ | -- | $3.28 \times 10^5$ | $1.50 \times 10^5$ | 0.34 | 0 |
| Ex. 13 | PMMA | 61.5/Mg(OH)$_2$ | 3.5/T558 | $3.28 \times 10^5$ | $1.52 \times 10^4$ | 1.33 | 0.99 |
| Ex. 14 | PMMA | 65/AMH | -- | $3.28 \times 10^5$ | $1.10 \times 10^6$ | -0.53 | 0 |
| Ex. 15 | PMMA | 61.5/AMH | 3.5/T558 | $3.28 \times 10^5$ | 0 | 5.52 | 6.04 |
| Ex. 16 | PMMA | 65/Bay H | -- | $3.28 \times 10^5$ | $5.60 \times 10^5$ | -0.23 | 0 |
| Ex. 17 | PMMA | 61.5/Bay H | 3.5/T558 | $3.28 \times 10^5$ | $1.55 \times 10^3$ | 2.33 | 2.56 |
| Ex. 18 | PMMA | 65/SiO$_2$ | -- | $3.28 \times 10^5$ | $8 \times 10^5$ | -0.39 | 0 |
| Ex. 19 | PMMA | 61.5/SiO$_2$ | 3.5/T558 | $3.28 \times 10^5$ | 0 | 5.52 | 5.90 |
| Control | PMMA | 60/ATH | -- | $2.88 \times 10^5$ | $3.53 \times 10^5$ | -0.09 | 0 |
| Ex. 20 | PMMA | 62.7/ATH | 0.5/Novaron | $2.88 \times 10^5$ | $2.50 \times 10^0$ | 4.92 | 5.00 |
| Ex. 21 | UPE | 65/ATH | -- | $2.88 \times 10^5$ | $5.18 \times 10^5$ | -0.25 | 0 |
| Ex. 22 | UPE | 61/ATH | 4.0/T558 | $2.88 \times 10^5$ | 0 | 5.46 | 5.71 |
| Ex. 23 | UPE | 65/ATH | -- | $2.88 \times 10^5$ | $3.94 \times 10^5$ | -0.14 | 0 |
| Ex. 24 | UPE | 61/ATH | 4.0/T558 | $2.88 \times 10^5$ | 0 | 5.46 | 5.60 |

The results from Tables 2 and 3 above demonstrated that T558 is an effective antibacterial agent with different combinations of resins and filler.

EXAMPLES 25-36

It has been found that the effectiveness of solid surface materials degrade with time. However, it was discovered that this effectiveness could be reestablished by sanding the working surface of the various solid surface materials. To demonstrate the degradation of the antibacterial effectiveness, samples of Corian® with Novaron (Corian N) were subjected to shaking for 24 hours in 75 mL of different types of household cleaning products as indicated below and then subjected to the SFTP for effectiveness against E. coli. After shaking with the cleaners and before testing for antibacterial effectiveness, the samples were washed with three changes of 100 mL of deionized water and then were shaken for 5 min. in another change of 100 mL of deionized water.

The following cleaners were used: Sunlight® dish washing soap (diluted 1:600 in water) (hereinafter Sunlight), Windex® with Ammonia D (undiluted) (hereafter Windex), Lysol® Basin, Tub & Tile Cleaner (undiluted) (hereafter Lysol), and Tilex® Soap Scum Remover (undiluted) (hereinafter Tilex). The household cleaners all demonstrated very effective antibacterial characteristics; however, the extensive rinsing of the washed samples precluded the antibacterial effect of the cleaners in the SFTP.

TABLE 4

| Sample | Cleaner | Initial CFU/mL | Avg. 24 h CFU/mL | $K_t$ @ 24 h | $\Delta_t$ @ 24 h |
|---|---|---|---|---|---|
| Corian Control | Not washed | $2.00 \times 10^5$ | $8.00 \times 10^5$ | -0.60 | 0 |
| Corian N Control | Not washed | $2.00 \times 10^5$ | 0 | 5.30 | 5.90 |
| Ex. 25 | Sunlight | $2.00 \times 10^5$ | $1.98 \times 10^4$ | 1.00 | 1.18 |
| Ex. 26 | Windex | $2.00 \times 10^5$ | $2.28 \times 10^5$ | -0.06 | 0.40 |
| Ex. 27 | Lysol | $2.00 \times 10^5$ | $3.18 \times 10^5$ | -0.20 | 0.16 |
| Ex. 28 | Tilex | $2.00 \times 10^5$ | $1.33 \times 10^5$ | 0.18 | 0.54 |

The table above shows that all of the household cleaners reduced the antibacterial effectiveness of Corian N after washing for 24 hours in the various household cleaners. It was of interest to know at what point in time the sample began to lose antibacterial effectiveness. As such, samples were shaken in 75 mL Lysol for various periods of time as indicated in the following table and then tested for antibacterial effectiveness using the SFTP.

TABLE 5

| Sample | Wash Time (h) | Initial CFU/mL | Avg. 24 h CFU/mL | $K_t$ @ 24 h | $\Delta_t$ @ 24 h |
|---|---|---|---|---|---|
| Control | Not washed | $6.20 \times 10^4$ | 0 | 4.79 | 5.90 |
| Ex. 29 | 1 | $6.20 \times 10^4$ | 0 | 4.79 | 5.90 |
| Ex. 30 | 2 | $6.20 \times 10^4$ | 0 | 4.79 | 5.90 |
| Ex. 31 | 3 | $6.20 \times 10^4$ | 0 | 4.79 | 5.90 |
| Ex. 32 | 4 | $6.20 \times 10^4$ | 0 | 4.79 | 5.90 |
| Ex. 33 | 5 | $6.20 \times 10^4$ | 0 | 4.79 | 5.90 |
| Ex. 34 | 6 | $6.20 \times 10^4$ | 0 | 4.79 | 5.90 |
| Ex. 35 | 8 | $6.20 \times 10^4$ | $4.25 \times 10^1$ | 3.15 | 4.26 |
| Ex. 36 | 24 | $6.20 \times 10^4$ | $1.18 \times 10^4$ | 0.72 | 1.83 |

The table above demonstrates that the antibacterial effectiveness of Corian N was not affected by washing in Lysol for up to 6 hours; however, a slight decrease in antibacterial effectiveness was noted at 8 hours with a significant decrease at 24 hours.

Examples 37-46

Samples of Corian N were washed with household cleaners as above, and also in an industrial cleaner Roccal® H (hereafter Roccal) available from National Laboratories, Montvale, NJ. The samples were rinsed with four changes of 100 mL of deionized water and allowed to air dry. One of each pair of samples was sanded with 180 grit paper and the other was sanded with ScotchBrite® (from 3M, St. Paul, MN) until the surface appeared dull. The samples were rinsed to remove dust from the sanding then patted dry. The samples were then submitted to the Shake Flask test. The test bacteria was E. *coli.*

TABLE 6

| Sample | Cleaner | Sanding Agent | Initial CFU/mL | Avg. 24 h CFU/mL | $K_t$ @ 24 h | $\Delta_t$ @ 24 h |
|---|---|---|---|---|---|---|
| Corian Control | -- | -- | $1.46 \times 10^5$ | $1.20 \times 10^6$ | -0.91 | 0 |
| Corian N Control | -- | -- | $1.46 \times 10^5$ | 0 | 5.16 | 6.08 |
| Ex. 37 | Sunlight | 180 grit | $1.46 \times 10^5$ | $3.0 \times 10^1$ | 3.67 | 4.59 |
| Ex. 38 | Sunlight | ScotchBrite | $1.46 \times 10^5$ | $5.00 \times 10^0$ | 4.39 | 5.30 |
| Ex. 39 | Windex | 180 grit | $1.46 \times 10^5$ | $1.50 \times 10^1$ | 3.96 | 4.88 |
| Ex. 40 | Windex | ScotchBrite | $1.46 \times 10^5$ | 0 | 5.16 | 6.08 |
| Ex. 41 | Lysol | 180 grit | $1.46 \times 10^5$ | 0 | 5.16 | 6.08 |
| Ex. 42 | Lysol | ScotchBrite | $1.46 \times 10^5$ | 0 | 5.16 | 6.08 |
| Ex. 43 | Tilex | 180 grit | $1.46 \times 10^5$ | 0 | 5.16 | 6.08 |
| Ex. 44 | Tilex | ScotchBrite | $1.46 \times 10^5$ | 0 | 5.16 | 6.08 |
| Ex. 45 | Roccal | 180 grit | $1.46 \times 10^5$ | 0 | 5.16 | 6.08 |
| Ex. 46 | Roccal | ScotchBrite | $1.46 \times 10^5$ | 0 | 5.16 | 6.08 |

As can be seen from the table, sanding restored the antibacterial effectiveness completely after the samples had been washed in various cleaners including one of industrial strength.

Examples 47-58

Samples made from a variety of polymers, fillers, and antibacterial agents as prepared in Examples 37-46 above were washed and sanded to test the loss and regaining of the antibacterial effectiveness. Some of the blocks were washed by shaking for 24 hours in 75 mL of Lysol and were then rinsed with four changes of 100 mL of deionized water, then allowed to air dry. Half of the blocks that had been washed were sanded with 180 grit paper and lightly rinsed. The washed blocks (sanded and unsanded) and the unwashed control blocks were submitted to the Shake Flask test as outlined above against *E. coli*. For convenience, due to the large number of samples, the results are presented in the following two tables.

TABLE 7

| Sample | Resin | w%/Filler | %/AB | Sample Condition | Initial CFU/mL | Avg. 24 h CFU/mL | $K_t$ @ 24 h | $\Delta_t$ @ 24 h |
|---|---|---|---|---|---|---|---|---|
| Corian Control | PMMA | 60/ATH | -- | N/W | $1.17 \times 10^5$ | $3.09 \times 10^5$ | -0.42 | 0 |
| Corian N Control | PMMA | 62.7/ATH | 0.5/Novaron | N/W | $1.17 \times 10^5$ | 0 | 5.07 | 5.49 |
| Ex. 47 | PMMA | 60/ATH | -- | W | $1.17 \times 10^5$ | 0 | 5.07 | 5.49 |
| Ex. 48 | PMMA | 60/ATH | -- | W/S | $1.17 \times 10^5$ | $2.55 \times 10^3$ | 1.66 | 2.08 |
| Ex 49 | PMMA | 60/ATH | 5.0/T558 | W | $1.17 \times 10^5$ | $4.85 \times 10^2$ | 2.38 | 2.80 |
| Ex. 50 | PMMA | 60/ATH | 5.0/T558 | W/S | $1.17 \times 10^5$ | 0 | 5.07 | 5.49 |
| Ex. 51 | UPE | 60/ATH | 5.0/T558 | W | $1.17 \times 10^5$ | 0 | 5.07 | 5.49 |
| Ex. 52 | UPE | 60/ATH | 5.0/T558 | W/S | $1.17 \times 10^5$ | 0 | 5.07 | 5.49 |

N/W = not washed W = washed, not sanded W/S = washed and sanded

TABLE 8

| Sample | Resin | %/Filler | %/AB | Sample Condition | Initial CFU/mL | Avg. 24 h CFU/mL | $K_t$ @ 24 h | $\Delta_t$ @ 24 h |
|---|---|---|---|---|---|---|---|---|
| Corian Control | PMMA | 60/ATH | -- | N/W | $1.45 \times 10^5$ | $5.20 \times 10^5$ | -0.55 | 0 |
| Corian N Control | PMMA | 62.7/ATH | 0.5/Novaron | N/W | $1.45 \times 10^5$ | 0 | 5.16 | 5.72 |
| Ex. 53 | EPOXY | 65/ATH | -- | N/W | $1.45 \times 10^5$ | $1.96 \times 10^5$ | -0.13 | 0.42 |
| Ex. 54 | EPOXY | 65/ATH | -- | W | $1.45 \times 10^5$ | $3.11 \times 10^5$ | -0.33 | 0.22 |
| Ex. 55 | EPOXY | 65/ATH | -- | W/S | $1.45 \times 10^5$ | $3.41 \times 10^5$ | -0.37 | 0.18 |
| Ex. 56 | EPOXY | 60/ATH | 5.0/Zelec | N/W | $1.45 \times 10^5$ | $2.50 \times 10^0$ | 4.62 | 5.17 |
| Ex. 57 | EPOXY | 60/ATH | 5.0/Zelec | W | $1.45 \times 10^5$ | $9.35 \times 10^3$ | 1.19 | 1.74 |
| Ex. 58 | EPOXY | 60/ATH | 5.0/Zelec | W/S | $1.45 \times 10^5$ | 0 | 5.16 | 5.72 |

N/W = not washed W = washed, not sanded W/S = washed and sanded

The results from the table above show that generally those samples that exhibited antibacterial effectiveness also showed reduced effectiveness after washing, but effectiveness could be restored upon sanding.

**Claims**

1. A method for restoring the antibacterial effectiveness in solid surface materials, which antibacterial effectiveness is diminished with time and use, by sanding the working surface of said solid surface material, said solid surface material comprising

   a matrix of a resin selected from the group consisting of acrylic compounds, unsaturated polyester compounds, and epoxy compounds;
   a filler dispersed in the matrix; and
   an antibacterial agent dispersed in the matrix.

2. The method of Claim 1, wherein the filler is selected from the group consisting of alumina trihydrate, alumina monohydrate, Bayer hydrate, magnesium hydroxide, calcium carbonate and silica.

3. The method of Claim 1 or 2, wherein the antibacterial agent is at least one inorganic compound selected from the group consisting of a mixture of zinc oxide and partially silver and sodium ion-exchanged zirconium phosphate; silver zinc zeolite; silver copper zeolite; silver zeolite and titanium oxide core particles having a first surface coating of a metal or metal compound having antibacterial properties comprising 0.05 to 20% by weight based on the weight of the core particles and a second surface coating comprising 0.05 to 20% by weight based on the weight of the core particles.

4. The method of Claim 3, wherein the metal or metal compound is selected from the group consisting of silver, silver oxide, silver halides, copper, copper (I) oxide, copper II oxide, copper sulfide, zinc oxide, zinc sulfide, zinc silicate and mixtures thereof.

5. The method of Claim 3 wherein the second surface coating is selected from the group consisting of silica, silicate, borosilicate, aluminosilicate, alumina, aluminum phosphate, or mixtures thereof.

6. The method of Claim 1, wherein the antibacterial agent is present in an amount from about 0.1 to about 5.0 weight percent.

7. The method of Claim 6, wherein the antibacterial agent is present in an amount from about 0.5 to about 5.0 weight percent.

8. The method of Claim 1, wherein the antibacterial agent is at least one organic compound selected from the group consisting of 3,5,3',4'-tetrachlorosalicylanilide and a compound containing quaternary ammonium salts.

9. The method of Claim 1, wherein the antibacterial agent is at least one of an inorganic compound and an organic compound.

10. The method of claim 1, wherein the solid surface material is cast into a sheet.

11. The method of claim 1, wherein the solid surface material is cast using a compression molding process.

12. The method of claim 1, wherein the solid surface material is cast using an extrusion process.

13. The method of claim 1, wherein the solid surface material is cast using an injection molding process.


**Patentansprüche**

1. Verfahren zur Wiederherstellung der antibakteriellen Effektivität bei Materialien fester Oberfläche, welche antibakterielle Effektivität im Laufe der Zeit und der Verwendung reduziert wird, durch Abschleifen der Arbeitsfläche des Materials fester Oberfläche, wobei

das Material fester Oberfläche

eine Matrix aus einem Harz ausgewählt aus der Gruppe bestehend aus Acrylverbindungen, ungesättigten Polyesterverbindungen und Epoxyverbindungen;
einen Füllstoff, der in der Matrix dispergiert ist; und
ein antibakterielles Mittel, das in der Matrix dispergiert ist, umfasst.

2.  Verfahren nach Anspruch 1, wobei der Füllstoff aus der Gruppe ausgewählt ist bestehend aus Aluminiumoxidtrihydrat, Aluminiumoxidmonohydrat, Bayer-Hydrat, Magnesiumhydroxid, Calciumcarbonat und Siliciumdioxid.

3.  Verfahren nach Anspruch 1 oder 2, wobei das antibakterielle Mittel mindestens eine anorganische Verbindung ist ausgewählt aus der Gruppe bestehend aus einer Mischung von Zinkoxid und teilweise silberionen- und natriumionenausgetauschtem Zirconiumphosphat; Silber-Zink-Zeolith; Silber-Kupfer-Zeolith; Silber-Zeolith und Titandioxidkernteilchen, die eine erste Oberflächenbeschichtung aus einem Metall oder einer Metallverbindung, das/die antibakterielle Eigenschaften aufweist und 0,05 bis 20 Gew.-%, auf das Gewicht der Kernteilchen bezogen, umfasst und eine zweite Oberflächenbeschichtung aufweisen, die 0,05 bis 20 Gew.-%, auf das Gewicht der Kernteilchen bezogen, umfasst.

4.  Verfahren nach Anspruch 3, wobei das Metall oder die Metallverbindung aus der Gruppe ausgewählt ist bestehend aus Silber, Silberoxid, Silberhalogeniden, Kupfer, Kupfer(I)oxid, Kupfer(II)oxid, Kupfersulfid, Zinkoxid, Zinksulfid, Zinksilikat und Mischungen derselben.

5.  Verfahren nach Anspruch 3, wobei die zweite Oberflächenbeschichtung aus der Gruppe ausgewählt ist bestehend aus Siliciumdioxid, Silicat, Borsilicat, Aluminosilicat, Aluminiumoxid, Aluminiumphosphat oder Mischungen derselben.

6.  Verfahren nach Anspruch 1, wobei das antibakterielle Mittel in einer Menge von etwa 0,1 bis etwa 5,0 Gewichtsprozent vorliegt.

7.  Verfahren nach Anspruch 6, wobei das antibakterielle Mittel in einer Menge von etwa 0,5 bis etwa 5,0 Gewichtsprozent vorliegt.

8.  Verfahren nach Anspruch 1, wobei das antibakterielle Mittel mindestens eine organische Verbindung ist ausgewählt aus der Gruppe bestehend aus 3,5,3',4'-Tetrachlorsalicylanilid und einer Verbindung, die quartäre Ammoniumsalze enthält.

9.  Verfahren nach Anspruch 1, wobei das antibakterielle Mittel mindestens eines von einer anorganischen Verbindung und einer organischen Verbindung ist.

10. Verfahren nach Anspruch 1, wobei das Material fester Oberfläche zu einer Platte gegossen wird.

11. Verfahren nach Anspruch 1, wobei das Material fester Oberfläche unter Zuhilfenahme eines Formpressverfahrens gegossen wird.

12. Verfahren nach Anspruch 1, wobei das Material fester Oberfläche unter Zuhilfenahme eines Extrusionsverfahrens gegossen wird.

13. Verfahren nach Anspruch 1, wobei das Material fester Oberfläche unter Zuhilfenahme eines Spritzgießverfahrens gegossen wird.

**Revendications**

1.  Procédé de restauration de l'efficacité antibactérienne dans des matériaux de surface solide, laquelle efficacité antibactérienne diminuant avec le temps et l'utilisation, par sablage de la surface de travail dudit matériau de surface solide, ledit matériau de surface solide comprenant

une matrice de résine choisie dans le groupe comprenant des composés acryliques, des composés de polyester insaturés et des composés époxy ;
un agent de remplissage dispersé dans la matrice ; et
un agent antibactérien dispersé dans la matrice.

**2.** Procédé selon la revendication 1, dans lequel l'agent de remplissage est choisi dans le groupe comprenant le trihydrate d'alumine, le monohydrate d'alumine, l'hydrate Bayer, l'hydroxyde de magnésium, le carbonate de calcium et la silice.

**3.** Procédé selon la revendication 1 ou 2, dans lequel l'agent antibactérien est au moins un composé inorganique choisi dans le groupe comprenant un mélange d'oxyde de zinc et partiellement, de phosphate de zirconium échangeur d'ions argent et sodium ; la zéolite d'argent zinc ; la zéolite d'argent cuivre ; des particules de noyau de zéolite d'argent et d'oxyde de titane ayant un premier revêtement de surface d'un métal ou d'un composé métallique ayant des propriétés antibactériennes comprenant 0,05 à 20% en poids sur la base du poids des particules de noyau et un deuxième revêtement de surface comprenant 0,05 à 20% en poids sur la base du poids des particules de noyau.

**4.** Procédé selon la revendication 3, dans lequel le métal ou le composé métallique est choisi dans le groupe comprenant l'argent, l'oxyde d'argent, les halogénures d'argent, le cuivre, l'oxyde de cuivre (I), l'oxyde de cuivre (II), le sulfure de cuivre, l'oxyde de zinc, le sulfure de zinc, le silicate de zinc et leurs mélanges.

**5.** Procédé selon la revendication 3, dans lequel le deuxième revêtement de surface est choisi dans le groupe comprenant la silice, le silicate, le borosilicate, l'aluminosilicate, l'alumine, le phosphate d'aluminium ou leurs mélanges.

**6.** Procédé selon la revendication 1, dans lequel l'agent anti-bactérien est présent en une quantité d'environ 0,1 à environ 5,0% en poids.

**7.** Procédé selon la revendication 6, dans lequel l'agent anti-bactérien est présent en une quantité d'environ 0,5 à environ 5,0% en poids.

**8.** Procédé selon la revendication 1, dans lequel l'agent antibactérien est au moins un composé organique choisi dans le groupe comprenant le 3,5,3',4'-tétrachlorosalicylanilide et un composé contenant des sels d'ammonium quaternaires.

**9.** Procédé selon la revendication 1, dans lequel l'agent anti-bactérien est au moins un composé choisi parmi un composé inorganique et un composé organique.

**10.** Procédé selon la revendication 1, dans lequel le matériau de surface solide est coulé en une feuille.

**11.** Procédé selon la revendication 1, dans lequel le matériau de surface solide est coulé en utilisant un procédé de moulage par compression.

**12.** Procédé selon la revendication 1, dans lequel le matériau de surface solide est coulé en utilisant un procédé d'extrusion.

**13.** Procédé selon la revendication 1, dans lequel le matériau de surface solide est coulé en utilisant un procédé de moulage par injection.

**EP 0 904 318 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 7266522 A
- JP 5058698 A
- US 9610991 W
- US 3847865 A
- US 4085246 A
- US 5180085 A